(19) **Europäisches Patentamt**

**European Patent Office**

**Office européen des brevets**

(11) **EP 1 452 488 B1**

(12) **EUROPEAN PATENT SPECIFICATION**

(45) Date of publication and mention
of the grant of the patent:
**09.03.2005 Bulletin 2005/10**

(51) Int Cl.[7]: **C01B 31/36**, C04B 35/565,
C10B 53/02

(21) Application number: **02800616.1**

(22) Date of filing: **11.10.2002**

(86) International application number:
**PCT/ES2002/000483**

(87) International publication number:
**WO 2003/031331 (17.04.2003 Gazette 2003/16)**

(54) **METHOD OF PRODUCING SILICON CARBIDE CERAMICS FROM PLANT PRECURSORS**

VERFAHREN ZUR HERSTELLUNG VON SILICIUMCARBIDKERAMIKEN AUS PFLANZLICHEN
VORLÄUFERN

PROCEDE DE FABRICATION DE CERAMIQUES DE CARBURE DE SILICIUM A PARTIR DE
PRECURSEURS VEGETAUX

(84) Designated Contracting States:
**AT BE BG CH CY CZ DE DK EE ES FI FR GB GR
IE IT LI LU MC NL PT SE SK TR**

(30) Priority: **11.10.2001 ES 200102278**

(43) Date of publication of application:
**01.09.2004 Bulletin 2004/36**

(73) Proprietor: **Universidad de Sevilla
41013 Sevilla (ES)**

(72) Inventors:
• **MARTINEZ FERNANDEZ, J.,
Dpto. Fisica de la Materia
s/n, 41012 Sevilla (ES)**

• **RAMIREZ DE ARELLANO LOPEZ, A.,
Dpto. Fisica de la
Mercedes, s/n, 41012 Sevilla (ES)**
• **VARELA FERIA, F.M., Dpto. Fisica de la Materia
s/n, 41012 Sevilla (ES)**
• **SINGH, Mrityunjay
Strongsville, OH 44136 (US)**

(74) Representative: **Temino Ceniceros, Ignacio
Abril Abogados
Calle Covarrubias, 9 2o dcha
28010 Madrid (ES)**

(56) References cited:
**RU-C- 2 117 026        US-A- 4 564 496
US-A- 5 380 475        US-A- 5 865 922**

EP 1 452 488 B1

## Description

### SUMMARY OF THE INVENTION

The process of the present invention refers to a fabrication procedure of silicon carbide ceramics from natural precursors, particularly by the infiltration of liquid silicon performs obtained by wood carbonization.

The invention is applicable to the production of raw materials, abrasion resistant and grinding components, cutting tools, heat resistant components, heat exchanger, heating elements, protecting tubes, engine and turbine components, components for the steel industry, catalyst carriers, cooling wall in nuclear fusion reactors, etc.

### BACKGROUND OF THE INVENTION

The driving force of the research in ceramic materials is their better behavior at high temperatures and/or aggressive environments compared to metallic alloys. Developing materials that could be used at higher temperatures that metals, (over 1000 °C) would have many advantages and new applications. It would increase the efficiency of engines ant turbines, and would reduce the emission of toxic gases.

One of the best candidates is silicon carbide, that present the following advantages versus other ceramics materials:

- Low density, very important for aerospace applications.
- High strength at high temperature, that do not decrease significantly under 1500 °C.
- Low thermal expansion coefficient, that will reduce residual stresses during thermal cycling.
- High thermal conductivity, the will help to decrease overheating in the metal-ceramic interface.
- High thermal stability
- Good resistant to corrosion and oxidation.
- High resistant to thermal chock.
- High resistant to abrasion.
- High hardness

There are several methods to fabricate silicon carbide. The most important are:

*Presureless sintering*

The silicon carbide powder is mixed with small amounts of boron and carbon, and heated up to temperature between 2000 °C and 2300 °C. The main limitation of this fabrication route are the high temperatures necessary, that imply the involvement of more expensive technologies, like the use of optical pyrometers for temperature measurement. Other effects like phase transformations between polymorphisms , and grain growth are also important. The material finishing also increase the production cost considerably.

*Sintering under pressure*

Higher cost than previous procedure and limited to simple geometries.

*Chemical vapor deposition*

Silicon carbide is produced by a reaction in a gas containing carbon and silicon, being the SiC deposited in a substrate. It does not need additives, but only relatively thin plates can be produced, the growing speed is slow, and the grain size change during the process.

*Reaction bonded*

A compact of silicon carbide powder and carbon react with liquid silicon at temperatures around 1410 °C. The final product have small contact area between SiC grains, what results in low strength at high temperature.

### DESCRIPTION OF THE INVENTION

This is a novel procedure for fabrication of silicon carbide ceramics from natural precursors, in particular from woods of different densities depending of the final product to be obtained. The method comprising three steps:

- Drying of the wood precursor
- Wood carbonization
- Infiltration process

The main characteristics of the fabrication steps are:

The wood is dried for 72 hours at 70 °C, if the it has been previously treated for industrial use, and it is dipped in alcohol and dried for 72 hours at 70 °C in the case of green wood.

In the wood carbonization process, the piece of wood is heated at a heat-up rate between 0.4 to 2 °C per minute, from room temperature to 600 °C, depending of the vegetal precursor used, and is cooled down to room temperature at a rate between 1 to 5 °C per minute. The wood is heated in an oxygen partial pressure of about $10^{-4}$ Torr.

For the infiltration procedure, high purity silicon and the carbon perform are located in a non reactive crucible, and heated up at a heat-up rate between 5 to 20 °C to temperatures between 1410 °C and 1600 °C, and pressures under $10^{-3}$ Torr. The infiltration process is driven by capillarity.

The amount of silicon is calculated to maintain the 1:1 ratio of atoms in silicon carbide (SiC). The number of carbon moles will be given by:

$$N_c = P_c/12$$

Where $P_c$ is the weight of carbon in grams.

The number of Si moles necessary ($N_{si}$) will be the same, so the necessary weight of Si ($P_{si}$) will be given by:

$$P_{si} = 28.1 \times N_{si} = 2,3 \, P_c$$

This amount is incremented in a 20 % to guarantee that the reaction of carbon is complete and that the amount of free silicon in the external surface is very small, being both issues very important. The carbon that does not react, will burnt out at high temperature, affecting the microstructure. The lack of silicon in the external surface is very important to ensure a net shape fabrication.

The residual silicon after the infiltration process is eliminated by locating next to the infiltrated sample a carbon perform and heating up both samples up to 1410 °C in vacuum.

There are a number of advantages of this fabrication process:

- Low cost due to

    I)the low processing temperatures, lower than the sintering temperatures by 600-900 °C.
    II) it does not need silicon carbide powder as a precursor
    III) the final products are net shape.

- Use of renewable materials.
- The final products are fibrous ceramics following the microstructure of the wood precursor used. With densities 50% lower, strengths similar to sintered silicon carbide are obtained.
- As the final product have a microstructure similar to continuous fiber composites, the toughness will be improved.
- A great range of microstructure and properties can be obtained simply by choosing the adequate vegetal precursor.
- Because the excellent properties previously referred, these materials can be used for applications requiring high strength, low density, and/or high specific surface. Additionally, these materials can have applications as high temperature filters, break disks, high temperature seals, acoustic and thermal isolation, and low density structures for medical implants.

## PRACTICAL EXAMPLE OF THE PROCCESS

A wood cylinder is taken, with dimensions of 100 mm length and 42 mm diameter, and weight of 106 grams before undergoing any process.

The wood is introduced in a $Al_2O_3$ tube, where an inert gas (argon) is flowed at a pressure slightly over the atmospheric pressure. The tube is located in a furnace. The ends of the tube are refrigerated, so the rubber seals do not melt.

After few minutes, the argon gas flow in a stable way thought the tube, and the system is heated up at a heating rate of 0.4 °C per minute up to a temperature of 1000 °C (the process takes 41 hours and 40 minutes). The system is kept at 1000 °C for 30 minutes and then is cooled down at 5 °C per minute (the cooling down time is 3 hours and 20 minutes). This process carbonize the wood piece. The carbonized wood has a length of 77 mm, diameter of 26 mm, and weight of 26 grams.

A parallelepiped of dimension 74,5 mm x 4,6 mm x 3,2 mm, and weight of 0,596 grams, was cut from the carbonized wood piece obtained by the previous process.

1.973 grams of single crystal silicon were located over the carbon piece referred in the previous paragraph. Silicon and carbon are located in a crucible. The crucible is then inserted in a tube furnace where rotatory vacuum is made.

The system is heated at a heat-up rate of 10 °C per minute, from room temperature to 1550 °C (the process takes 2 hours and 25 minutes). The system is then kept at 1550 °C for 30 minutes and then is cooled down at 10 °C per minute (the cooling down time is 2 hours and 25 minutes).

Once the system is at room temperature, air is inserted in the tube and the crucible is taken out.

The silicon carbide ceramic resulting from this process has a length of 74.5 mm x 4.6 mm x 3.2 mm, so there is not significant size change, and the weight is 2,394 grams.

A great range of microstructure and properties can be obtained simply by choosing the adequate vegetal precursor:

- Soft woods, like pine, could be used to fabricated high temperature filters or catalyst carriers because its high porosity and specific surface.
- Bamboo could be used to fabricate silicon carbide tubes
- Hard woods, like oak or eucalyptus, could be used to fabricate fibrous materials for structural applications, like reinforcing elements.

## Claims

1. A method to fabricate porous silicon carbide ceramics from natural precursors. The method comprising:

    a. Drying of the wood precursor
    b. Wood carbonization

c. Infiltration process

**2.** Method to fabricate silicon carbide ceramics from natural precursors of claim 1, wherein the wood is dried for 72 hours at 70 °C, if the wood have been previously treated for industrial use.

**3.** Method to fabricate silicon carbide ceramics from natural precursors of claim 1, wherein the wood is dipped in alcohol and dried for 72 hours at 70 °C, when green wood is used.

**4.** Method to fabricate silicon carbide ceramics from natural precursors of claim 1 to 3, wherein the piece of wood is heated at a heat-up rate between 0.4 to 2 °C per minute, from room temperature to 600 °C, depending of the vegetal precursor used, and is cooled down to room temperature at a rate between 1 to 5 °C per minute.

**5.** Method to fabricate silicon carbide ceramics from natural precursors of previous claims, wherein the wood is heated in an oxygen partial pressure of about $10^{-4}$ Torr.

**6.** Method to fabricate silicon carbide ceramics from natural precursors of previous claims, wherein the infiltration is done with high purity silicon after the process of drying and carbonizing the wood.

**7.** Method to fabricate silicon carbide ceramics from natural precursors of previous claims, wherein the infiltration process is driven by capillarity, the high purity silicon and the carbon perform are located in a non reactive crucible, and heated up to temperatures between 1410 °C and 1600 °C, and pressures under $10^{-3}$ Torr. The carbonized wood will be heated at a heat-up rate between 5 to 20 °C and will be cooled down to room temperature at a rate between 5 to 20 °C per minute.

**8.** Method to fabricate silicon carbide ceramics from natural precursors of previous claims, wherein the amount of silicon used for infiltration is 2,3 times the perform weight.

**9.** Method to fabricate silicon carbide ceramics from natural precursors of previous claims, wherein the residual silicon after the infiltration process is eliminated by locating next to the infiltrated sample a carbon perform and heating up both samples up to 1410 °C in vacuum.

**10.** Silicon carbide ceramis obtained from natural precursors following the method of claims 1 to 9.

**Patentansprüche**

**1.** Eine Methode zur Herstellung poröser Siliziumkarbidkeramik aus natürlichen Vorläufern.
  Die Methode umfasst dabei Folgendes:

  a. Trocknen des Holzvorläufers
  b. Holzverkohlung
  c. Infiltrierungsprozess

**2.** Methode zur Herstellung von Siliziumkarbidkeramik aus natürlichen Vorläufern von Patentanspruch 1, bei der das Holz 72 Stunden lang bei 70 °C getrocknet wird, wenn es zuvor für den industriellen Einsatz behandelt wurde.

**3.** Methode zur Herstellung von Siliziumkarbidkeramik aus natürlichen Vorläufern von Patentanspruch 1, bei der das Holz 72 Stunden lang bei 70 °C in Alkohol getaucht wird, wenn grünes Holz verwendet wird.

**4.** Methode zur Herstellung von Siliziumkarbidkeramik aus natürlichen Vorläufern von Patentanspruch 1 bis 3, bei der das Holzstück je nach verwendetem pflanzlichem Vorläufer mit 0,4 bis 2 °C Aufheizspanne pro Minute von Raumtemperatur auf 600 °C erhitzt und mit 1 bis 5 °C pro Minute auf Raumtemperatur abgekühlt wird.

**5.** Methode zur Herstellung von Siliziumkarbidkeramik aus natürlichen Vorläufer der obigen Patentansprüche, bei der das Holz in einem Sauerstoffteildruck von etwa $10^{-4}$ Torr erhitzt wird.

**6.** Methode zur Herstellung von Siliziumkarbidkeramik aus natürlichen Vorläufern der obigen Patentansprüche, bei der die Infiltration nach dem Trocknungs- und Verkohlungsprozess des Holzes mit hochreinem Silizium erfolgt.

**7.** Methode zur Herstellung von Siliziumkarbidkeramik aus natürlichen Vorläufern der obigen Patentansprüche, bei der der Infiltrationsprozess durch Kapillarität erfolgt, das hochreine Silizium und die Kohleprobe in einen nichtreaktiven Schmelztiegel gegeben und bei Temperaturen von 1410 °C bis 1600 °C und unter $10^{-3}$ Torr Druck erhitzt werden. Das verkohlte Holz wird mit 5 bis 20 °C Aufheizspanne erhitzt und mit 5 bis 20 °C pro Minute auf Raumtemperatur abgekühlt.

**8.** Methode zur Herstellung von Siliziumkarbidkeramik aus natürlichen Vorläufern der obigen Patentansprüche, bei der die zur Infiltration verwendete Siliziummenge das 2,3-fache des Probengewichts beträgt.

**9.** Methode zur Herstellung von Siliziumkarbidkeramik aus natürlichen Vorläufern der obigen Patentansprüche, bei der das Restsilizium nach dem Infiltrationsprozess beseitigt wird, indem neben die infiltrierte Probe eine Kohleprobe gegeben wird und beide Proben im Vakuum auf 1410 °C erhitzt werden.

**10.** Gemäß der Methode der Patentansprüche 1 bis 9 erzielte Siliziumkarbidkeramik aus natürlichen Vorläufern.

**Revendications**

**1.** Une méthode pour fabriquer des céramiques au carbure de silicium à partir de précurseurs naturels. La méthode comprenant :

   a. Le séchage du précurseur bois
   b. La carbonisation du bois
   c. Un procédé d'infiltration

**2.** Une méthode pour fabriquer des céramiques au carbure de silicium à partir des précurseurs naturels de la revendication 1, selon laquelle le bois est séché pendant 72 heures à 70 °C, s'il a préalablement été traité pour usage industriel.

**3.** Une méthode pour fabriquer des céramiques au carbure de silicium à partir des précurseurs naturels de la revendication 1, selon laquelle le bois et trempé dans de l'alcool et séché pendant 72 heures à 70 °C, si du bois vert est employé.

**4.** Une méthode pour fabriquer des céramiques au carbure de silicium à partir des précurseurs naturels des revendications 1 à 3, selon laquelle le morceau de bois est chauffé à un rendement thermique compris entre 0,4 et 2 °C par minute, à partir de la température ambiante jusqu'à 600 °C, en fonction du précurseur végétal employé, et est refroidi à la température ambiante à un rendement thermique compris entre 1 et 5 °C par minute.

**5.** Une méthode pour fabriquer des céramiques au carbure de silicium à partir des précurseurs naturels des revendications précédentes, où le bois est chauffé dans une pression partielle d'oxygène d'environ $10^{-4}$ Torr.

**6.** Une méthode pour fabriquer des céramiques au carbure de silicium à partir des précurseurs naturels des revendications précédentes, selon laquelle l'infiltration est réalisée avec de la silicone de grande pureté après le procédé de séchage et de carbonisation du bois.

**7.** Une méthode pour fabriquer des céramiques au carbure de silicium à partir des précurseurs naturels des revendications précédentes, selon laquelle le processus d'infiltration est conduit par capillarité, la silicone de grande pureté et l'échantillon de charbon sont placés dans un creuset non réactif et chauffés à des températures allant de 1410 °C à 1600 °C et à des pressions inférieures à $10^{-3}$ Torr. Le bois carbonisé sera chauffé à un rendement thermique compris entre 5 et 20 °C et sera refroidi à la température ambiante à un rendement thermique de 5 à 20 °C par minute.

**8.** Une méthode pour fabriquer des céramiques au carbure de silicium à partir des précurseurs naturels des revendications précédentes, selon laquelle la quantité de silicone utilisée pour l'infiltration est de 2,3 fois le poids de l'échantillon.

**9.** Une méthode pour fabriquer des céramiques au carbure de silicium à partir des précurseurs naturels des revendications précédentes, selon laquelle la silicone résiduelle après le processus d'infiltration est éliminée en plaçant à côté de l'échantillon infiltré un échantillon de charbon et en chauffant les deux échantillons jusqu'à une température de 1410 °C à vide.

**10.** Les céramiques au carbure de silicium obtenues à partir de précurseurs naturels en appliquant la méthode des revendications 1 à 9.